Europäisches Patentamt

European Patent Office

Office européen des brevets

(19)

(11) Veröffentlichungsnummer : **0 146 710**
**B1**

(12)  **EUROPÄISCHE PATENTSCHRIFT**

(45) Veröffentlichungstag der Patentschrift :
16.06.87

(21) Anmeldenummer : 84112352.4

(22) Anmeldetag : 13.10.84

(51) Int. Cl.⁴ : **B 29 C 45/14**// B29L31/34,
G01P3/488, H02K21/44 ,
B29K105:34

(54) **Verfahren zur Herstellung eines Induktionsgebers.**

(30) Priorität : 21.12.83 DE 3346159

(43) Veröffentlichungstag der Anmeldung :
03.07.85 Patentblatt 85/27

(45) Bekanntmachung des Hinweises auf die Patenterteilung : 16.06.87 Patentblatt 87/25

(84) Benannte Vertragsstaaten :
**DE FR GB IT NL SE**

(56) Entgegenhaltungen :
**EP-A- 0 003 838**
**DE-A- 2 154 847**
**DE-A- 2 418 143**
**DE-B- 1 017 236**
**DE-B- 1 086 042**
**FR-A- 2 159 510**
**GB-A- 1 223 877**
**US-A- 2 825 093**

(73) Patentinhaber : **VDO Adolf Schindling AG**
**Gräfstrasse 103**
**D-6000 Frankfurt/Main (DE)**

(72) Erfinder : **Form, Roland, Dipl.-Ing.**
**Heergasse 2**
**D-6307 Linden (DE)**
Erfinder : **Welter, Horst, Ing. grad.**
**Jenaer Strasse 12**
**D-6307 Linden (DE)**

(74) Vertreter : **Könekamp, Herbert, Dipl.-Ing.**
**Sodener Strasse 9**
**D-6231 Schwalbach (DE)**

## Beschreibung

Die Erfindung betrifft ein Verfahren zur Herstellung eines Induktionsgebers mit einem Gehäuse und einem durch Spritzgießen herstellbaren Spulenkörper, in dem ein bolzenförmiger ferromagnetischer Eisenkern, ein Permanentmagnet und gegebenenfalls eine Rückschlußplatte koaxial hintereinander angeordnet sind und der Spulenkörper im Bereich des Eisenkerns von einer Induktionsspule umschlossen ist, deren Anfang und Ende mit Kontaktfahnen eines Anschlusses verbindbar sind.

Ein derartiger Induktionsgeber ist beispielsweise aus FR-A-21 59 510 (Fig. 7a) bekannt.

Bei derartigen Verfahren ist es bekannt, eine Vielzahl von Einzelbauteilen des Induktionsgebers herzustellen und anschließend zusammenzubauen. Diese Vielzahl an Bauteilen ergibt sich durch die komplizierte Formgebung, die bei den durch Spritzgießen aus Kunststoff hergestellten Teilen eine schwierige Anordnung von Gießkernen bedingt.

Aufgabe der Erfindung ist es daher, ein Verfahren nach dem Oberbegriff zu schaffen, das den Aufbau eines Induktionsgebers mit wenigen, einfach herstell- und montierbaren Bauteilen ermöglicht.

Diese Aufgabe wird erfindungsgemäß dadurch gelöst, daß zum Spritzgießen des Spulenkörpers der Eisenkern, der Permanentmagnet und gegebenenfalls die Rückschlußplatte in eine Spulenkörperform derart eingelegt werden, daß das dem Permanentmagnet entgegengesetzte Ende des Eisenkerns in einer axialen Ausnehmung der Spulenkörperform und der Permanentmagnet und/oder die Rückschlußplatte und/oder der Eisenkern durch radial anliegende Radialkerne gehalten sind. Durch dieses Verfahren werden beim Spritzgießen in einem Arbeitsgang alle Bauteile des elektromagnetischen Systems mit Ausnahme der Spule zueinander lagerichtig zusammengebaut und gleichzeitig die Halterung zur Aufnahme der Induktionsspule hergestellt. Die Radialkerne sind dabei so angeordnet, daß sie sowohl den Permanentmagnet und/oder die Rückschlußplatte und/oder den Eisenkern in ihrer radial richtigen Lage in der Spulenkörperform zu halten als auch dafür zu sorgen daß unnötige Materialanhäufungen vermieden werden. Außerdem ist der fertige Spulenkörper leicht entformbar.

Sind der Eisenkern, der Permanentmagnet und gegebenenfalls die Rückschlußplatte durch einen magnetseitig anliegenden federnden Kern axial in der Spulenkörperform arretiert, so wird dieser Kern während des Spritzgießens durch den Kunststoff verdrängt, so daß der Spulenkörper an seinem magnetseitigen Ende eine geschlossene Fläche bildet, wodurch die Bauteile des elektromagnetischen Systems nach Zusammenbau mit dem Gehäuse dicht abgeschlossen sind.

Das Verdrängen des Kerns wird durch Anschrägen seines am Permanentmagnet bzw. an der Rückschlußplatte anliegenden Endes erreicht, wodurch bei Beaufschlagung durch den Kunststoff eine den Kern aus der Spulenkörperform herausdrängende Kraft auf den Kern wirkt.

Zu einer weiteren Einsparung an Bauteilen kommt es auf einfache Weise, wenn der Spulenkörper in der Spulenkörperform einteilig mit einem magnetseitigen Anschlußteil hergestellt wird, in dem der Anschluß und die zum Bereich der Induktionsspule führenden Kontaktfahnen eingeformt werden.

Werden die Kontaktfahnen von Haltekernen in der Spulenkörperform gehalten, so wird gleichzeitig ihre lagerichtige Anordnung sichergestellt und eine Materialanhäufung vermieden.

Zur einfachen Entformbarkeit können die Radialkerne jeweils mit einer Stirnseite sich gegenüberliegend radial in die Spulenkörperform ragen.

Damit die Haltekerne und Radialkerne leicht gemeinsam aus der Spulenkörperform entfernbar sind, können sie parallel zueinander in die Spulenkörperform ragen, wobei im Hinblick auf eine besonders günstige Vermeidung von Materialanhäufungen vorzugsweise die Haltekerne symmetrisch zu beiden Seiten der Radialkerne in die Spulenkörperform ragen.

Liegen dabei die Haltekerne tangential am Permanentmagnet und/oder der Rückschlußplatte und/oder dem Eisenkern an so sind diese Bauteile an vier gleichmäßig am Umfang verteilten Stellen in ihrer optimalen Einbaulage gehalten. Die Haltekerne erfüllen dabei eine dreifache Funktion, indem sie die Kontaktfahnen und den Permanentmagnet bzw. die Rückschlußplatte bzw. den Eisenkern lagerichtig halten sowie eine Materialanhäufung vermeiden.

Der federnde Kern kann den Bereich des Anschlußteils der Spulenkörperform durchragen, ohne eine einwandfreie Formgebung zu behindern.

Die Komplettierung der Funktionsteile des Induktionsgebers erfolgt auf einfache Weise, indem der Spulenkörper mit der Induktionsspule versehen und deren Anfang und Ende an je eine Kontaktfahne gelötet wird.

Ist das Anschlußteil als Verschluß des topfförmigen Gehäuses ausgebildet, wobei vorzugsweise Anschlußteil und Gehäuse als ineinandersteckbare Teile ausgebildet sind, die miteinander verschweißt werden, so brauchen bei der Endmontage des Induktionsgebers nur zwei Bauteile ineinandergefügt werden, so daß die Montage extrem vereinfacht wird.

Ein Ausführungsbeispiel der Erfindung ist in der Zeichnung dargestellt und wird im folgenden näher beschrieben. Es zeigen

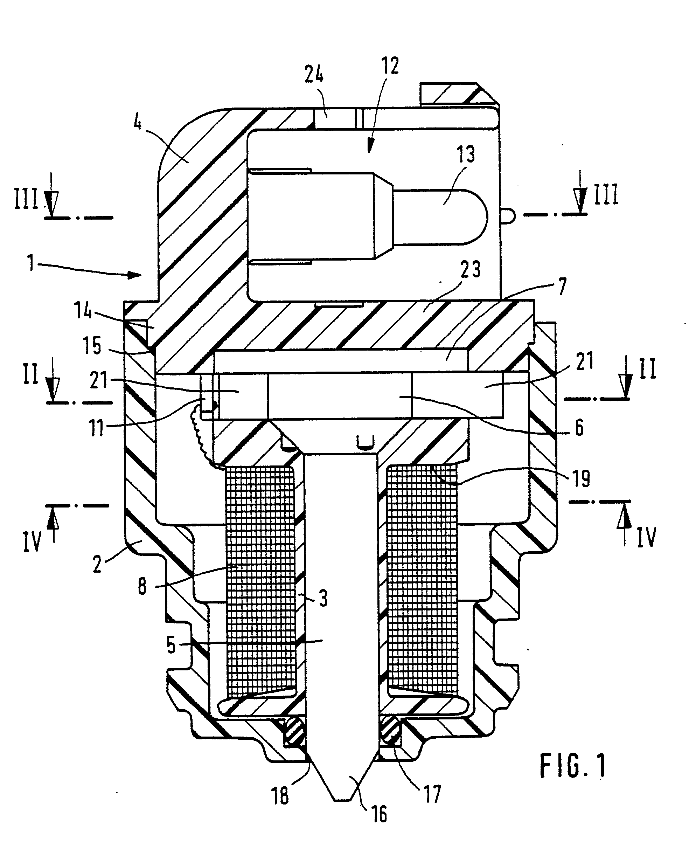

Figur 1 einen Querschnitt eines nach dem Verfahren hergestellten Induktionsgebers,

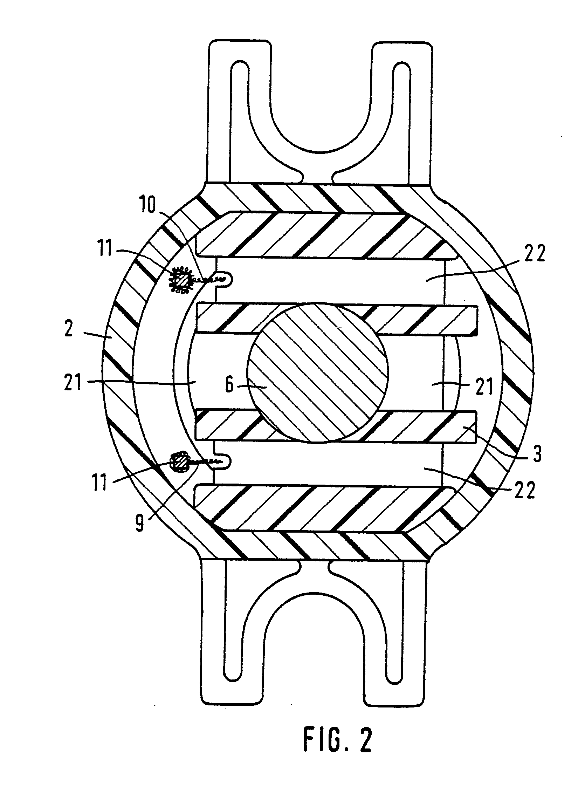

Figur 2 eine Schnittansicht des Induktionsgebers nach Figur 1 entlang der Linie II-II,

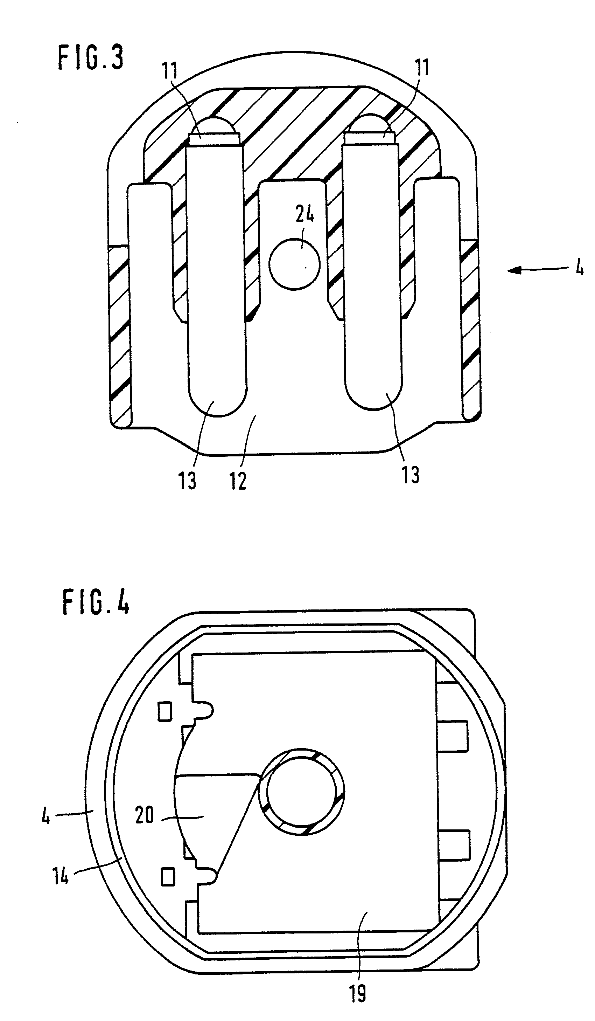

Figur 3 eine Schnittansicht des Induktionsgebers nach Figur 1 entlang der Linie III-III,

Figur 4 eine Schnittansicht des Spulenkörpers aus Figur 1 entlang der Linie IV-IV ohne Induktionsspule und Eisenkern.

Der in den Figuren dargestellte Induktionsgeber besteht aus einem Spulenkörperteil 1, das in ein topfartiges Gehäuse 2 einsetzbar ist. Das Spulenkörperteil 1 ist einteilig aus einem Spulenkörper 3 und einem Anschlußteil 4 gebildet.

In dem Spulenkörperteil sind axial hintereinander ein bolzenförmiger ferromagnetischer Eisenkern 5, ein Permanentmagnet 6 und eine Rückschlußplatte 7 angeordnet.

Im Bereich des Eisenkerns 5 ist der Spulenkörper 3 von einer Induktionsspule 8 umschlossen.

Der Anfang 9 und das Ende 10 der Induktionsspule 8 sind jeweils zu einer Kontaktfahne 11 geführt und mit dieser verlötet. Die Kontaktfahnen 11 führen durch das Anschlußteil 4 zu einem in diesem Anschlußteil 4 angeordneten Anschluß 12, der als Steckanschluß mit zwei Kontaktstiften 13 ausgebildet ist.

Das Anschlußteil 4 ist hülsenartig um den Anschluß 12 geformt.

Das Spulenkörperteil 1 besitzt eine unlaufende Stufe 14 mit der das Spulenteil 1 in eine entsprechende Stufenausnehmung 15 des Gehäuses 2 eingesetzt ist. Nach diesem Zusammenfügen sind Spulenkörperteil 1 und Gehäuse 2 durch Ultraschallschweißen im Bereich der Stufe 14 und der Stufenausnehmung 15 miteinander dicht verbunden.

Das aus dem Spulenkörper 3 herausragende freie Ende 16 des Eisenkerns 5 ragt von einem Dichtring 17 abgedichtet durch eine Bohrung 18 im Boden des Gehäuses 2.

Damit der radial innen liegende Anfang 9 der Induktionsspule 8 ohne Beschädigung zu seinem Kontaktstift 11 geführt werden kann, ist in der Stirnwand 19 des Spulenkörpers 3 eine Vertiefung 20 eingeformt.

Im Bereich des Permanentmagneten 6 sind sich gegenüberliegend von diesem ausgehend und nach außen in den Gehäuseinnenraum mündend Radialöffnungen 21 ausgebildet.

Parallel dazu sind weiterhin zwei den Spulenkörper 3 quer durchgreifende Durchgangsöffnungen 22 ausgebildet. Diese Durchgangsöffnungen 22 verlaufen tangential an der zylindrischen Mantelfläche des Permanentmagneten 6 vorbei, wobei die Kontaktfahnen 11 sich jeweils vor einer Mündung einer Durchgangsöffnung 22 befinden. Sowohl durch die Radialöffnungen 21 als auch durch die Durchgangsöffnungen 22 sind in diesem Bereich des Spulenkörpers 3 Materialanhäufungen vermieden.

Zur Herstellung des Spulenkörperteils 1 werden Eisenkern 5, Permanentmagnet 6 und Rückschlußplatte 7 durch Kleben koaxial miteinander zu einer Baugruppe verbunden. Diese Baugruppe wird dann derart in eine Spulenkörperform, die der Kontur des Spulenkörperteils 1 entspricht, eingesetzt, daß das freie Ende 16 des Eisenkerns 5 in eine entsprechende Ausnehmung der Spulenkörperform hineinragt. Danach werden zur Herstellung der Radialöffnungen 21 bzw. der Durchgangsöffnungen 22 entsprechende Radialkerne bzw. Haltekerne derart in die Spulenkörperform ragend angeordnet, daß die Radialkerne mit ihren Stirnseiten auf zwei sich gegenüberliegenden Seiten und die Haltekerne mit ihren Längsseiten auf dazu um 90° versetzten sich ebenfalls gegenüberliegenden Seiten am Permanentmagnet 6 anliegen.

Damit ist die position der Baugruppe in radialer Richtung eindeutig festgelegt.

In axialer Richtung wird die Rückschlußplatte 7 von einem federnden Kern koaxial beaufschlagt und dadurch das freie Ende 16 in Anschlag am Boden der Ausnehmung in der Spulenkörperform gehalten.

Die Kontaktstifte 13 werden in der Spulenkörperform und die Kontaktfahnen 11 durch die Haltekerne in ihrer korrekten Einbaulage gehalten.

Nun erfolgt der Spritzgießvorgang durch den der Spulenkörperteil 1 komplett aus Kunststoff hergestellt wird. Da der federnde Kern dabei durch den Kunststoff um ein bestimmtes Maß axial von der Rückschlußplatte 7 weggeschoben wird, entsteht eine geschlossene Wand 23 zwischen Spulenkörper 3 und Anschlußteil 4, wodurch später im zusammengebauten Zustand des Induktionsgebers der Gehäuseraum nach außen verschlossen ist. Durch den federnden Kern entsteht im Anschlußteil 4 eine Koaxialbohrung 24.

Das Gehäuse 2 wird ebenfalls als Spritzgußteil aus Kunststoff hergestellt. Nach Anordnung der Induktionsspule 8 und dem Anlöten ihres Anfangs 9 sowie ihres Endes 10 an Kontaktfahnen 11 und dem Aufschieben des Dichtringes 17 auf das freie Ende 16 des Eisenkerns 5 wird diese Baueinheit in das Gehäuse 2 eingesetzt und mit diesem im Bereich der Stufe 14 und der Stufenausnehmung 15 durch Ultraschall verschweißt.

**Patentansprüche**

1. Verfahren zur Herstellung eines Induktionsgebers mit einem Gehäuse und einem durch Spritzgießen herstellbaren Spulenkörper, in dem ein bolzenförmiger ferromagnetischer Eisenkern, ein permanentmagnet und gegebenenfalls eine Rückschlußplatte koaxial hintereinander angeordnet sind und der Spulenkörper im Bereich des Eisenkerns von einer Induktionsspule umschlossen ist, deren Anfang und Ende mit Kontaktfahnen eines Anschlusses verbindbar sind, dadurch gekennzeichnet, daß zum Spritzgießen des Spulenkörpers (3) der Eisenkern (5), der Permanentmagnet (6) und gegebenenfalls die Rückschlußplatte (7) in eine Spulenkörperform derart eingelegt werden, daß das dem Permanentmagnet (6) entgegengesetzte Ende des Eisenkerns (5) in einer axialen Ausnehmung der Spulenkörperform und der Permanentmagnet und/oder die Rückschlußplatte (7) und/oder der Eisenkern (5) durch radial anliegende Radialkerne gehalten sind.

2. Verfahren nach Anspruch 1, dadurch gekennzeichnet, daß der Eisenkern (5), der Permanentmagnet (6) und gegebenenfalls die Rückschlußplatte (7) durch einen magnetseitig anliegenden federnden Kern axial in der Spulenkörperform arretiert sind.

3. Verfahren nach einem der vorhergehenden Ansprüche, dadurch gekennzeichnet, daß der Spulenkörper (3) in der Spulenkörperform einteilig mit einem magnetseitigen Anschlußteil (4) hergestellt wird, in dem der Anschluß (12) und die zum Bereich der Induktionsspule (8) führenden Kontaktfahnen (11) eingeformt werden.

4. Verfahren nach Anspruch 3, dadurch gekennzeichnet, daß die Kontaktfahnen (11) von Haltekernen in der Spulenkörperform gehalten werden.

5. Verfahren nach einem der vorhergehenden Ansprüche, dadurch gekennzeichnet, daß die Radialkerne jeweils mit einer Stirnseite sich gegenüberliegend radial in die Spulenkörperform ragen.

6. Verfahren nach einem der vorhergehenden Ansprüche, dadurch gekennzeichnet, daß die Haltekerne und die Radialkerne parallel zueinander in die Spulenkörperform ragen.

7. Verfahren nach Anspruch 6, dadurch gekennzeichnet, daß die Haltekerne symmetrisch zu beiden Seiten der Radialkerne in die Spulenkörperform ragen.

8. Verfahren nach Anspruch 7, dadurch gekennzeichnet, daß die Haltekerne tangential am Permanentmagnet (6) und/oder der Rückschlußplatte (7) anliegen.

9. Verfahren nach einem der vorhergehenden Ansprüche, dadurch gekennzeichnet, daß der federnde Kern den Bereich des Anschlußteils (4) der Spulenkörperform durchragt.

10. Verfahren nach einem der vorhergehenden Ansprüche, dadurch gekennzeichnet, daß der Spulenkörper (3) mit der Induktionsspule (8) versehen und deren Anfang (9) und Ende (10) an je eine Kontaktfahne (11) gelötet wird.

11. Verfahren nach einem der vorhergehenden Ansprüche, dadurch gekennzeichnet, daß das Anschlußteil (4) als Verschluß des topfförmigen Gehäuses (2) ausgebildet ist.

12. Verfahren nach Anspruch 11, dadurch gekennzeichnet, daß Anschlußteil (4) und Gehäuse (2) als ineinandersteckbare Teile ausgebildet sind, die miteinander verschweißt werden.

**Claims**

1. Process for manufacturing an inductive sensor having a housing and a coil former which is adapted to be produced by injection moulding and in which a pin-form ferromagnetic iron core, a permanent magnet, and possibly a back-circuit plate, are arranged coaxially one behind the other, and the coil former is surrounded in the region of the iron core by an induction coil the beginning and end of which coil are connectable to contact lugs of a connection element, characterised in that, for the injection moulding of the coil former (3), the iron core (5) and the permanent magnet (6) and possibly the back-circuit plate (7) are so placed in a coil former mould that that end of the iron core (5) which is opposite from the permanent magnet (6) is held in an axial recess of the coil former mould, and the permanent magnet and/or the back-circuit plate (7) and/or the iron core (5) are held by radially abutting radial cores.

2. Process according to claim 1, characterised in that the iron core (5), the permanent magnet (6), and possibly the back-circuit plate (7) are secured axially in the coil former mould by an elastic core abutting at the magnet side.

3. Process according to one of the preceding claims, characterised in that the coil former (3) is produced in the coil former mould integrally with a magnet-end connecting part (4) in which there are incorporated by moulding the connection element (12) and the contact lugs (11) leading to the region of the induction coil (8).

4. Process according to claim 3, characterised in that the contact lugs (11) are held by holding cores in the coil former mould.

5. Process according to one of the preceding claims, characterised in that the radial cores in each case project with one end face situated opposite one another radially into the coil former mould.

6. Process according to one of the preceding claims, characterised in that the holding cores and the radial cores project parallel to one another into the coil former mould.

7. Process according to claim 6, characterised in that the holding cores project symmetrically at both sides of the radial cores into the coil former mould.

8. Process according to claim 7, characterised in that the holding cores abut tangentially on the permanent magnet (6) and/or the back-circuit plate (7).

9. Process according to one of the preceding claims, characterised in that the elastic core projects through the region of the connecting part (4) of the coil former mould.

10. Process according to one of the preceding claims, characterised in that the coil former (3) is provided with the induction coil (8), and the beginning (9) and end (10) of said coil are soldered each to one of the contact lugs (11).

11. Process according to one of the preceding claims, characterised in that the connecting part (4) is constructed as a closure for the cup-shaped housing (2).

12. Process according to claim 11, characterised in that connecting part (4) and housing (2) are constructed as parts adapted to be inserted one into the other, these being welded to one another.

**Revendications**

1. Procédé pour fabriquer un capteur inductif comportant un boîtier et un corps de bobine réalisable par moulage par injection, dans lequel un noyau ferromagnétique en fer, en forme de tige, un aimant permanent et éventuellement une plaque de fermeture de circuit sont disposés coaxialement l'un derrière l'autre et le corps de bobine est entouré, au voisinage du noyau en fer, par une bobine d'induction dont le début et la fin peuvent être reliés à des languettes de contact d'une connexion, procédé caractérisé en ce que, pour le moulage par injection du corps (3) de bobine, on place le noyau (5) en fer, l'aimant permanent (6) et éventuellement la plaque (7) de fermeture de circuit dans un moule de fabrication de corps de bobine, de manière que l'extrémité du noyau (5) en fer opposée à l'aimant permanent (6) soit maintenue dans un évidement axial du moule de fabrication de corps de bobine et que l'aimant permanent et/ou la plaque (7) de fermeture de circuit et/ou le noyau (5) en fer soient maintenus par des noyaux radiaux disposés radialement.

2. Procédé selon la revendication 1, caractérisé en ce que le noyau (5) en fer, l'aimant permanent (6) et éventuellement la plaque (7) de fermeture de circuit sont arrêtés axialement, dans le moule de fabrication de corps de bobine, par un noyau élastique placé du côté de l'aimant.

3. Procédé selon l'une des revendications précédentes, caractérisé en ce que le corps (3) de bobine est fabriqué, dans le moule de fabrication de corps de bobine, en une seule pièce avec une partie (4) formant connexion du côté aimant, partie dans laquelle la connexion (12) et les languettes (11) de contact menant à la zone de la bobine (8) d'induction sont formées par moulage.

4. Procédé selon la revendication 3, caractérisé en ce que les languettes (11) de contact des noyaux de retenue sont maintenues dans le moule de fabrication du corps de bobine.

5. Procédé selon l'une des revendications précédentes, caractérisé en ce qu'un côté frontal de chaque noyau radial fait radialement saillie en des directions opposées dans le moule de fabrication de corps de bobine.

6. Procédé selon l'une des revendications précédentes, caractérisé en ce que les noyaux de retenue et les noyaux radiaux sont disposés parallèlement l'un à l'autre et font saillie dans le moule de fabrication de corps de bobine.

7. Procédé selon la revendication 6, caractérisé en ce que les noyaux de retenue font symétriquement saillie des deux côtés .des noyaux radiaux dans le moule de fabrication de corps de bobine.

8. Procédé selon la revendication 7, caractérisé en ce que les noyaux de retenue sont tangentiellement appuyés sur l'aimant permanent (6) et/ou sur la plaque (7) de fermeture de circuit.

9. Procédé selon l'une des revendications précédentes, caractérisé en ce que le noyau élastique traverse la zone réservée à la partie (4) formant connexion dans le moule de fabrication de corps de bobine.

10. Procédé selon l'une des revendications précédentes, caractérisé en ce que le corps (3) de bobine est muni de la bobine (8) d'induction et en ce que le début (9) et la fin (10) de cette bobine sont chacun reliés par brasage ou soudage à une languette (11) de contact.

11. Procédé selon l'une des revendications précédentes, caractérisé en ce que la partie (4) formant connexion est réalisée en forme de couvercle du boîtier (2) en forme de pot.

12. Procédé selon la revendication 11, caractérisé en ce que la partie (4) formant connexion et le boîtier (2) sont réalisés sous forme de parties mutuellement insérables, que l'on réunit l'une à l'autre par soudage ou brasage.

FIG.1

FIG. 2

FIG.3

FIG.4